# EUROPEAN PATENT SPECIFICATION

(11) **EP 4 113 481 B1**
(45) Date of publication and mention of the grant of the patent: **11.03.2026**
(21) Application number: 22179052.0
(22) Date of filing: 14.06.2022
(51) Int. Cl.: G08G 5/00

(54) **SYSTEMS AND METHODS FOR PRESENTING MESSAGES TO FLIGHT CREW**
SYSTEME UND VERFAHREN ZUM PRÄSENTIEREN VON NACHRICHTEN FÜR DIE FLUGBESATZUNG
SYSTÈMES ET PROCÉDÉS DE PRÉSENTATION DES MESSAGES À UN ÉQUIPAGE

(30) Priority: 30.06.2021 IN 202111029351; 19.08.2021 US 202117406827
(43) Date of publication of application: 04.01.2023
(73) Proprietor: Honeywell International Inc., Charlotte, NC 28202 (US)
(72) Inventor: AGARWAL, Jitender Kumar, Charlotte, 28202 (US)
(74) Representative: Ingrassia, Fisher & Lorenz UK Ltd.

(56) References cited:
- EP-A1- 3 660 461
- US-A1- 2009 306 981
- US-A1- 2015 089 392
- US-A1- 2017 178 629
- US-A1- 2018 182 250

## Description

### TECHNICAL FIELD

Embodiments of the subject matter described herein relate generally to communicating with a flight crew member in aerial vehicles. More particularly, embodiments of the subject matter relate to presenting selected messages to a flight crew member during flight.

### BACKGROUND

A transcription system can transcribe over-the-air voice communications between an air traffic controller (ATC) and a flight crew member such as a pilot. Over-the-air communications may include both ownship communications and traffic communications. The combination of the ownship communications and traffic communications can provide a flight crew member with a complete picture of all flying aircrafts in an airspace. The ownship communication may include commands for tactical changes in flight path, strategical navigation, traffic alerts, etc. The strategic navigation and other commands may require flight crew to note down important information and execute a command at a later time. Having to note down an important command and to remember to execute the important command at a later time can increase a flight crew member's workload.

Hence, it is desirable to provide systems and methods for alerting a flight crew member of important commands at a later time when knowledge of the command is needed. For example US2018182250A1 discloses a system and method that allows the pilot to save a message, and allows the pilot to be reminded of the content of relevant messages at the appropriate moment. Furthermore, other desirable features and characteristics of the present invention will become apparent from the subsequent detailed description and the appended claims, taken in conjunction with the accompanying drawings and the foregoing technical field and background.

### SUMMARY

The invention comprises a transcription system for an aircraft as defined in appended independent claim 1, and a corresponding method as defined in appended independent claim 6. Preferred embodiments of the invention are defined according to the dependent claims.

### BRIEF DESCRIPTION OF THE DRAWINGS

Embodiments of the subject matter will hereinafter be described in conjunction with the following drawing figures, wherein like numerals denote like elements, and wherein:
FIG. 1 is a block diagram depicting an example flight environment such as one around a busy aerodrome, in accordance with some embodiments;
FIG. 2 is a block diagram depicting example avionics equipment, in accordance with some embodiments;
FIG. 3A is a diagram depicting an example graphical message element, in accordance with some embodiments;
FIG. 3B is a diagram depicting an example graphical message element that has been bookmarked, in accordance with some embodiments;
FIG. 4A is a diagram depicting an example graphical display page for displaying graphical message elements, in accordance with some embodiments;
FIG. 4B is a diagram depicting an example graphical display page for displaying bookmarked graphical message elements, in accordance with some embodiments;
FIGS. 5A and 5B are diagrams depicting an example graphical message element in different states of alert service activation, in accordance with some embodiments; and
FIG. 6 is a process flow chart depicting an example process for a transcription system, in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical components and various processing steps. It should be appreciated that such functional and/or logical components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

A transcription system can transcribe over-the-air voice communications between an air traffic controller (ATC) and a flight crew member such as a pilot. Over-the-air communications may include both ownship communications and traffic communications. Ownship communications may include commands from ATC for an ownship pilot. The pilot needs to act on the commands provided. The ownship communications may also include traffic alerts that are communicated to ownship pilot. Traffic communication may include commands for traffic pilots. Knowledge of these commands can provide situational awareness to an ownship pilot.

The combination of the ownship communications and traffic communications can provide a flight crew member with a complete picture of all flying aircrafts in an airspace. The ownship communication may include commands for tactical changes in flight path, strategical navigation, traffic alerts, etc. All strategic navigation and other commands may require flight crew to note down important information and execute the command at a later time.

The subject matter described herein discloses apparatus, systems, techniques, and articles for providing a mechanism for bookmarking important messages and for providing an alert facility to automatically make the flight crew aware of certain messages at a time when the flight crew needs to take action based on message content in the message. With time-based trajectories and other new time-based procedures such as RTA (required time of arrival) or Flight Interval management, these features can be quite useful for flight crew. The alert facility is useful in both IFR (Instrument Flight Rules) or VFR (Visual flight rules) flights and can remind a pilot about ATC messages.

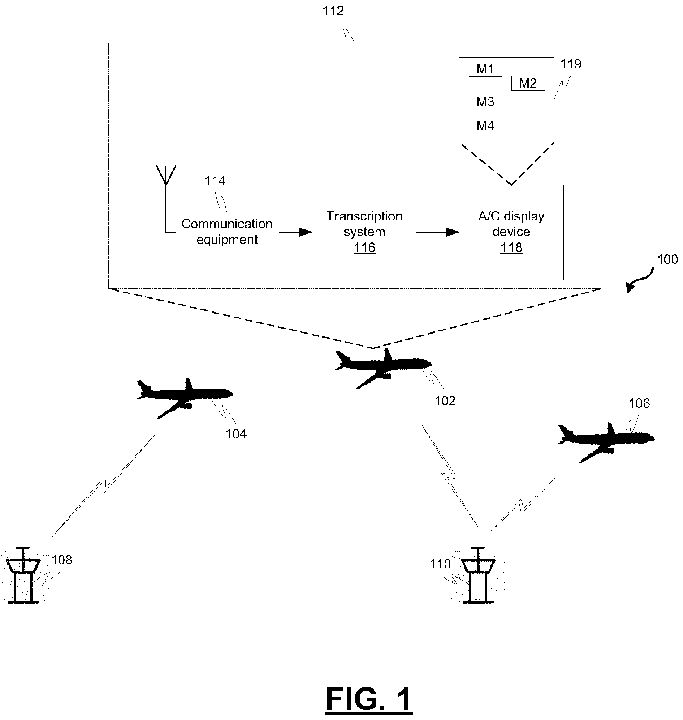

FIG. 1 is a block diagram depicting an example flight environment 100 such as one around a busy aerodrome. The example environment 100 includes a plurality of aerial vehicles (ownship aircraft 102 and traffic aircraft 104, 106 in this example), but could include a variety of types of aerial vehicles such as helicopters, UAVs (unmanned aerial vehicles), and others. The example environment 100 also includes a plurality of flight operation centers (FOCs) *(e.g.,* air traffic control towers 108, 110) containing control personnel such as air traffic controllers (ATC) for directing ground and air traffic in the vicinity of the aerodrome.

The example ownship aircraft 102 includes avionics equipment 112 that receives the ongoing communications between the aerial vehicles *(e.g.,* 102, 104, 106) and ATC *(e.g.,* via towers 108, 110) using communication equipment 114, and presents the ongoing communications as a continuous stream of audio to a transcription system 116. The transcription system 116 decodes the continuous stream of audio, generates formatted text from the decoded continuous stream of audio, and signals an aircraft (A/C) display device 118 to display the generated formatted text for viewing by the flight crew onboard the ownship aircraft 102. The aircraft display device 118 may be one of many types of graphical display units onboard an aircraft such as a navigation display, a PFD (primary flight display), a PED (personal electronic device), an EFB (electronic flight bag), HUD (heads up display), HDD (heads down display), and others. The display of the formatted text may be made via a graphical display page 119 that displays each generated textual message (M1, M2, M3, M4, . ..) in a manner that visually identifies which messages are directed to the ownship aircraft.

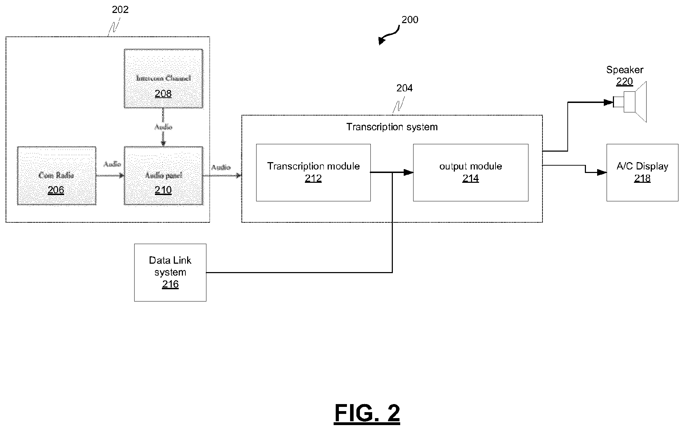

FIG. 2 is a block diagram depicting example avionics equipment 200. The example avionics equipment 200 includes communication equipment 202 and an example transcription system 204 for receiving ongoing over-the-air communications and generating formatted text from the over-the-air communications for display onboard an aerial vehicle. The example communication equipment 202 includes a Com radio 206 (such as that known in the art) and an intercom channel 208 (such as that known in the art) for receiving over-the-air communications between various aerial vehicles (ownship and traffic aerial vehicles) and ATC. The example communication equipment 202 also includes an audio panel 210 (such as that known in the art) for accumulating the over-the-air communications from various sources and outputting the audio from the over-the-air communications.

The example transcription system 204 is configured to receive audio communications from or directed to a flight operating center (FOC) *(e.g.,* ATC or some other FOC) via the communication equipment 202 *(e.g.,* via audio panel 210), extract message content from the received audio communications, generate formatted text from the extracted message content, and display the formatted text from the received voice communications onboard the aerial vehicle. The example transcription system 204 is also configured to receive data link communications (DLC) *(e.g.,* CPDLC (controller pilot data link communication)) from or to an FOC (such as ATC) via a data link system 216, extract message content from the DLC, generate formatted text from the extracted message content, and display the formatted text from the received DLC communications onboard the aerial vehicle. The example transcription system 204 includes a transcription module 212 for extracting message content from the received audio communications and the DLC, and an output module 214 for generating formatted text from the extracted message content, generating graphics for displaying the formatted text, and signaling an aircraft display 218 to display the generated graphics onboard the aerial vehicle.

Each of the transcription module 212 and the output module 214 is implemented by a processing component such as a controller *(e.g.,* the same or separate controllers). The processing component includes at least one processor and a computer-readable storage device or media encoded with programming instructions for configuring the processing component. The processor may be any custom-made or commercially available processor, a central processing unit (CPU), a graphics processing unit (GPU), an application specific integrated circuit (ASIC), a field programmable gate array (FPGA), an auxiliary processor among several processors associated with the processing component, a semiconductor-based microprocessor (in the form of a microchip or chip set), any combination thereof, or generally any device for executing instructions.

The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable programming instructions, used by the processing component.

The example transcription module 212 is configured to retrieve message content from a plurality of received messages. The plurality of received messages may include a plurality of controller pilot data link communications (CPDLC) messages and a plurality of voice messages. The example transcription module 212 is configured to transcribe message content from the plurality of received voice messages to text. The example transcription module 212 is also configured to extract message content from the plurality of received CPDLC messages as text.

The example transcription module 212 is configured to decode the audio from the voice messages using speech recognition techniques to convert the audio into text. The speech recognition techniques may be implemented using machine learning techniques such as deep neural networks, statistical techniques, rule-based systems, and others. The example transcription module 212 may use various techniques such as NLP to convert the text from the audio and/or DLC to formatted text.

The example output module 214 is configured to generate a graphical message element for each of the plurality of received messages that includes a section for displaying a textual representation of the message content for a corresponding received message and a bookmark symbol for display on the graphical message element, wherein the bookmark symbol is selectable to change from an unselected state to a selected state indicating that the graphical message element has been bookmarked.

The message content for a corresponding received message may include message content from a CPDLC message or transcribed message content from a voice message. The graphical message elements for each of the plurality of received messages may include graphical message elements having message content from a CPDLC message and graphical message elements having transcribed message content from a voice message.

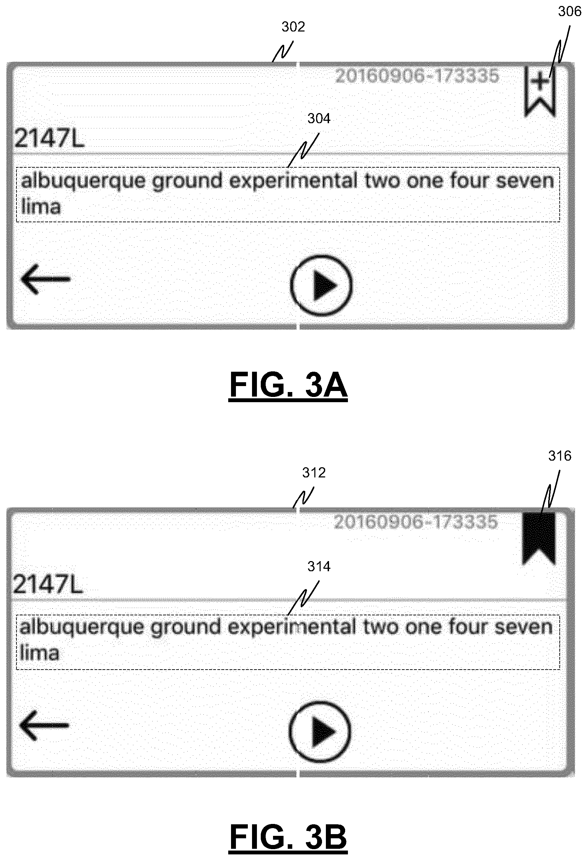

FIG. 3A is a diagram depicting an example graphical message element 302. The example graphical message element 302 includes text section 304 for displaying a textual representation of the message content for a corresponding received message. The example graphical message element 302 also includes a bookmark symbol 306 for display on the graphical message element 302. The example bookmark symbol 306 is selectable to change from an unselected state to a selected state indicating that the graphical message element 302 has been bookmarked. The example output module 214 may a apply a visual cue to the bookmark symbol 306 to indicate the selected state and the unselected state. As an example, the visual cue may comprise a non-solid visual state for a first state and a solid visual state for a second state. Alternatively, or additionally, the visual cue may comprise a first color for a first state and a second color for a second state. Other visual cues may also be applied.

FIG. 3B is a diagram depicting an example graphical message element 312 that has been bookmarked. The example graphical message element 312 includes a text section 314 and bookmark symbol 316. The example bookmark symbol 316 has been selected *(e.g.,* by flight crew member) to indicate that the example graphical message element 312 has been bookmarked. To indicate that the example graphical message element 312 has been bookmarked, the example output module 214 has applied a visual cue to the example bookmark symbol 316. The example bookmark symbol 316 is displayed in a solid visual state in contrast to a non-solid visual state as illustrated for the example bookmark symbol 306.

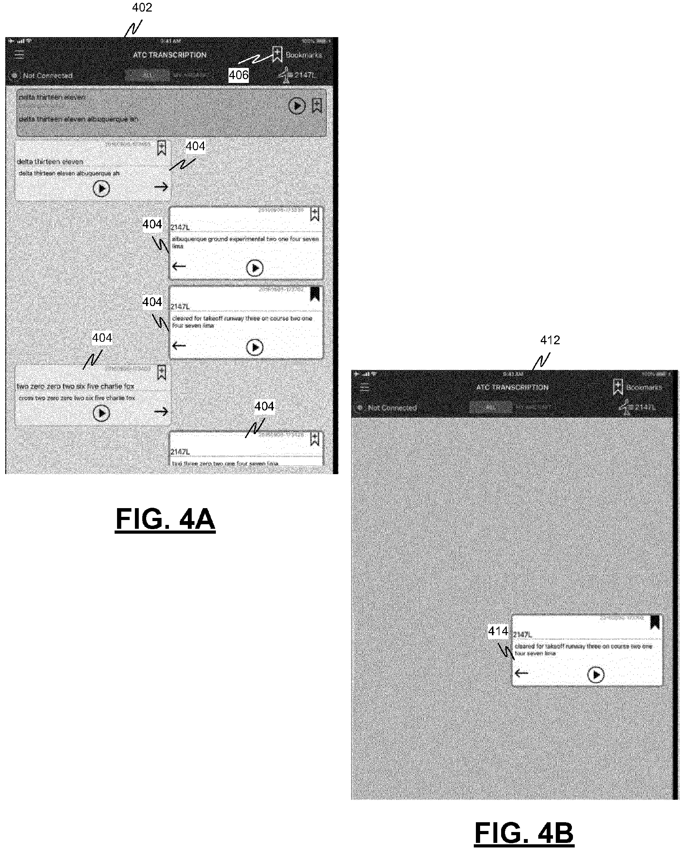

The example output module 214 is also configured to generate a first graphical display page for display on an aircraft display device for displaying the graphical message elements for each of the plurality of received messages. FIG. 4A is a diagram depicting an example graphical display page 402 for displaying graphical message elements 404. As more and more messages are received, the page can be populated with many graphical message elements 404. The graphical message elements 404 representing bookmarked messages may be pushed out of view by newer graphical message elements 404 that are not bookmarked.

To allow a flight crew member to access and view bookmarked graphical message elements more easily, the example output module 214 is configured to generate a second graphical display page for display on the aircraft display device for displaying the graphical message elements that have been bookmarked but not graphical message elements that have not been bookmarked. FIG. 4B is a diagram depicting an example graphical display page 412 for displaying bookmarked graphical message elements 414.

To reach the graphical display page for displaying bookmarked but not non bookmarked graphical message elements, the example output module 214 is configured to provide a selectable bookmark graphical element 406 for display on the first graphical display page 402. Selection of the selectable bookmark graphical element 406 *(e.g.,* by a flight crew member or user) indicates to the example output module 214 to signal the display device to display the second graphical display page 412 instead of the first graphical display page 402, wherein bookmarked graphical message elements 414 are displayed but not graphical message elements that have not been bookmarked. The example output module 214 is configured to signal the aircraft display device to display the first graphical display page 402 when not prompted (*e.g*., by a flight crew member or user) to display the second graphical display page 412.

The example output module 214 is further configured to generate an alert service with a custom condition-based facility for each bookmarked graphical message element, wherein when enabled for a particular bookmarked graphical message element the alert service provides an alert (*e.g*., visual and/or audible via speaker system 220) when a timed period has expired, or other specified condition has been met for the custom condition-based facility for the particular bookmarked graphical message element.

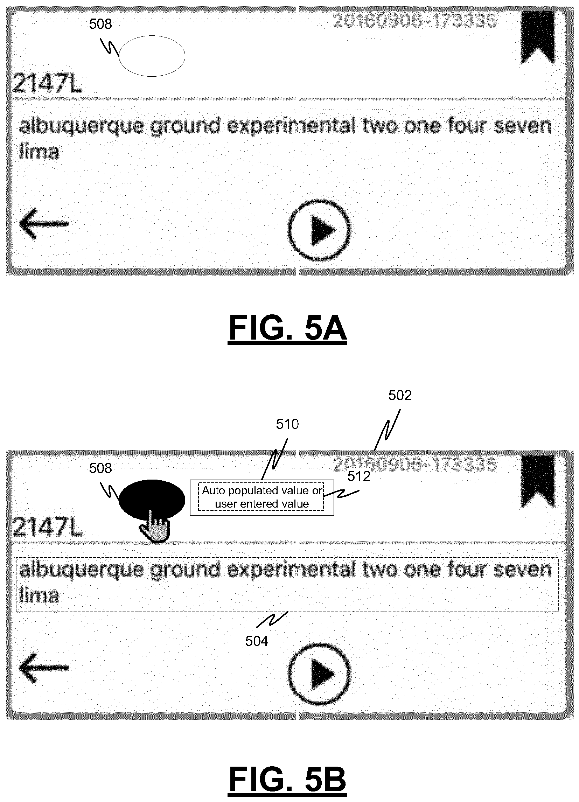

FIGS. 5A and 5B are diagrams depicting an example graphical message element 502 in different states of alert service activation. In this example, the output module 214 is configured to generate an alert icon 508 for display on the bookmarked graphical message elements 502 for activating the alert service. Upon user selection of the alert icon 508, as illustrated in FIG. 5B, the example output module 214 generates a field 510, for display on the graphical message element 502, for user selection of a timed period duration or a specified condition for the custom condition-based facility for the bookmarked graphical message element. The example output module 214 is configured to set the custom condition-based facility for the bookmarked graphical message element 502 to the user selected time duration or condition upon user selection of a value in the field 510 until the specified condition is met or the duration has expired and generate an alert (visual and/or audible) for the corresponding graphical message element 502 when the condition is met to bring the corresponding graphical message element 502 to the attention of flight crew.

The field 510 may include an auto populated value 512 that may be overridden to a different user selected duration based on user input to the field 510. The auto populated value 512 in the field 510 may be based on a predetermined default timer value. The predetermined default timer value may be set or changed by configuring a default timer under a user settings page provided by the transcription system. The auto populated value 512 in the field 510 may be based on message content 504 of the bookmarked graphical message element 502 when information from which a specified condition or the duration for a timed period can be derived is provided in the message content 504. Following are example implementations of this feature.

For the following example message content - *"Climb and maintain five thousand. Expect niner thousand one zero minutes after departure*" - the alert service will auto create and schedule a timer for 10 minutes. Crew will be alerted with visual or aural cues.

For the following example message content - *"Cleared to FINGR intersection. Hold south on 011 course, 1 minute leg, left turns. Maintain 2,500. Expect further clearance 1820"* - The alert service will auto create and schedule a reminder at 1820 Zulu time (*e.g.,* a specified condition).

For the following example message content - *"Cross Robbinsville at and maintain six thousand at two three zero knots"* - The alert service will auto create reminder for condition cross waypoint "Robbinsville". Once the crossing event is confirmed based on GPS position, the reminder for ATC message will be triggered so that crew can make informed decision and maintain 230 knots speed.

For the following example message content - *"After passing JSY VOR, climb altitude 3000 feet"* - The alert service will auto create reminder for condition pass through JSY VOR. Once the passing VOR event is confirmed by avionics based on position data, the reminder will be triggered so that crew can initiate climb procedures to 3000 feet.

The example output module 214 is configured to cause an alert to be delivered to a flight crew member via a visual alert *(e.g.,* via a display device 218 or light) or via an audible alerting system (*e.g*., speaker system 220, public address system, or other audio system onboard the aircraft) to inform of the alert.

The example output module 214 may a apply a visual cue to the alert icon 508 to indicate the state of the alert service (*e.g*., activated or not activated) for a bookmarked graphical message element 502. As an example, the visual cue may comprise a non-solid visual state for a first state and a solid visual state for a second state. Alternatively, or additionally, the visual cue may comprise a first color for a first state and a second color for a second state. Other visual cues may also be applied.

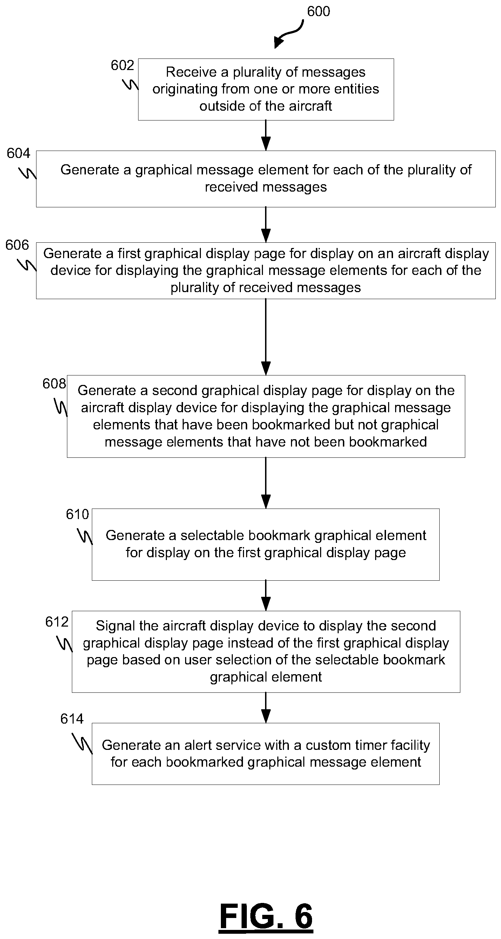

FIG. 6 is a process flow chart depicting an example process 600 for a transcription system. The order of operation within the process 600 is not limited to the sequential execution as illustrated in the figure but may be performed in one or more varying orders as applicable and in accordance with the present disclosure.

The example process 600 includes receiving a plurality of messages originating from one or more entities outside of the aircraft (operation 602). The plurality of messages include a plurality of voice messages and may include one or more CPDLC messages. The one or more entities includes a flight operating center (FOC) and optionally one or more other aircraft. The FOC may comprise an ATC center or some other type of FOC.

The example process 600 includes generating a graphical message element for each of the plurality of received messages (operation 604). The graphical message elements include a section for displaying a textual representation of the message content for a corresponding received message and a bookmark symbol for display on the graphical message element. The bookmark symbol is selectable to change from an unselected state to a selected state indicating that the graphical message element has been bookmarked. When a received message is a voice message, the generating a graphical message element includes transcribing message content from the received voice message to text.

The example process 600 includes generating a first graphical display page for display on an aircraft display device for displaying the graphical message elements for each of the plurality of received messages (operation 606) and generating a second graphical display page for display on the aircraft display device for displaying the graphical message elements that have been bookmarked but not graphical message elements that have not been bookmarked (operation 608).

The example process 600 includes generating a selectable bookmark graphical element for display on the first graphical display page (operation 610). Selection of the selectable bookmark graphical element indicates the selection of bookmarked graphical message elements for display but not graphical message elements that have not been bookmarked.

Either the first page *(e.g.,* by default) or the second page may be displayed on the aircraft display device. The example process 600 includes signaling the aircraft display device to display the second graphical display page instead of the first graphical display page based on user selection of the selectable bookmark graphical element (operation 612).

The example process 600 includes generating an alert service with a custom timer facility for each bookmarked graphical message element (operation 614). When enabled for a particular bookmarked graphical message element, the alert service provides an alert (visual and/or audible) upon meeting a condition, such as the expiration of a timed period, for the custom timer facility for the particular bookmarked graphical message element. Generating an alert service may include: generating an alert icon for display on each of the bookmarked graphical message elements for activating the alert service; generating a field, for display upon user selection of the alert icon, for user selection of a condition, such as a time duration for the custom timer facility for a bookmarked graphical message element; setting the custom timer facility for a bookmarked graphical message element to the user selected condition upon user selection of a value in the field; and generating an alert (visual and/or audible) for a corresponding graphical message element upon the user selected condition being met to make flight crew aware of the corresponding graphical message element.

The field may include an auto populated condition, such as a timed period duration, that may be overridden to a different user selected condition based on user input to the field. The auto populated value in the field may be based on message content of the bookmarked graphical message element when information from which a condition can be derived is provided in the message content or may be based on a predetermined default timer value when information from which a duration for the timed period can be derived is not provided in the message content. The predetermined default timer value may be set or changed by configuring a default timer under a user settings page provided by the transcription system.

In one embodiment, not according to the invention, a transcription system for an aircraft is provided. The transcription system comprises a controller. The controller is configured to: receive a plurality of messages originating from one or more entities outside of the aircraft; extract message content from the plurality of received messages as a textual representation of the message content; generate a graphical message element for each of the plurality of received messages that includes a section for displaying the textual representation of the message content for a corresponding received message and a bookmark symbol for display on the graphical message element, wherein the bookmark symbol is selectable to change from an unselected state to a selected state indicating that the graphical message element has been bookmarked; generate a first graphical display page for display on an aircraft display device for displaying the graphical message elements for each of the plurality of received messages; generate a second graphical display page for display on the aircraft display device for displaying the graphical message elements that have been bookmarked but not graphical message elements that have not been bookmarked; and signal the aircraft display device to display the first graphical display page or the second graphical display page.

These aspects and other embodiments may include one or more of the following features. The plurality of messages may comprise a plurality of controller pilot data link communications (CPDLC) messages and/or a plurality of voice messages. The one or more entities may include a flight operating center (FOC). The FOC may comprise an air traffic control (ATC) center. The message content for a corresponding received message may comprise message content from a CPDLC message or transcribed message content from a voice message. To extract message content from the plurality of received messages as a textual representation of the message content, the controller may be configured to transcribe message content from the plurality of received voice messages to text. The graphical message elements for each of the plurality of received messages may include graphical message elements having message content from a CPDLC message and graphical message elements having transcribed message content from a voice message. The controller is, according to the invention, further configured to generate a selectable bookmark graphical element for display on the first graphical display page that when selected indicates the selection of bookmarked graphical message elements for display but not graphical message elements that have not been bookmarked. The controller is, according to the invention, further configured to signal the aircraft display device to display the second graphical display page instead of the first graphical display page based on user selection of the selectable bookmark graphical element. The controller may be configured to apply a visual cue to the bookmark symbol to indicate the selected state and the unselected state. The visual cue may comprise a non-solid visual state for a first state and a solid visual state for a second state. The visual cue may comprise a first color for a first state and a second color for a second state. The visual cue may comprise a change in shape or change in size of the bookmark symbol. The controller is, according to the invention, further configured to generate an alert service with a custom condition-based facility for each bookmarked graphical message element, wherein when enabled for a particular bookmarked graphical message element the alert service provides an alert (*e.g*., visual and/or audible) when a timed period has expired, or other specified condition has been met for the custom condition-based facility for the particular bookmarked graphical message element. The controller may be further configured to generate an alert icon for display on the bookmarked graphical message elements for activating the alert service. The controller may be further configured to generate a field for display, upon user selection of the alert icon, for user selection of a specified condition for the custom condition-based facility for a bookmarked graphical message element. The controller may be further configured to set the custom condition-based facility for a bookmarked graphical message element to a user selected condition upon user selection of a value in the field, and generate an alert (*e.g*., visual and/or audible) for a corresponding graphical message element upon the user selected condition being met to make flight crew aware of the corresponding graphical message element. The field may include an auto populated value that may be overridden to a different user selected value based on user input to the field. The auto populated value in the field may be based on message content of the bookmarked graphical message element when information from which a specified condition or a duration for a timed period can be derived is provided in the message content. The auto populated value in the field may be based on a predetermined default value. The predetermined default value may be set or changed by configuring a default timer under a user settings page provided by the transcription system.

In another embodiment, not according to the invention, a method for a transcription system for an aircraft is provided. The method comprises: receiving a plurality of messages originating from one or more entities outside of the aircraft; extracting message content from the plurality of received messages as a textual representation of the message content; generating a graphical message element for each of the plurality of received messages that includes a section for displaying the textual representation of the message content for a corresponding received message and a bookmark symbol for display on the graphical message element, wherein the bookmark symbol is selectable to change from an unselected state to a selected state indicating that the graphical message element has been bookmarked; generating a first graphical display page for display on an aircraft display device for displaying the graphical message elements for each of the plurality of received messages; generating a second graphical display page for display on the aircraft display device for displaying the graphical message elements that have been bookmarked but not graphical message elements that have not been bookmarked; and signaling the aircraft display device to display the first graphical display page or the second graphical display page.

These aspects and other embodiments may include one or more of the following features. The plurality of messages may comprise a plurality of controller pilot data link communications (CPDLC) messages and/or a plurality of voice messages. The one or more entities may include a flight operating center (FOC). The FOC may comprise an air traffic control (ATC) center. The message content for a corresponding received message may comprise message content from a CPDLC message or transcribed message content from a voice message. Extracting message content from the plurality of received messages as a textual representation of the message content may comprise transcribing message content from the plurality of received voice messages to text. The graphical message elements for each of the plurality of received messages may include graphical message elements having message content from a CPDLC message and graphical message elements having transcribed message content from a voice message. The method may further comprise applying a visual cue to the bookmark symbol to indicate the selected state and the unselected state. The visual cue may comprise a non-solid visual state for a first state and a solid visual state for a second state. The visual cue may comprise a first color for a first state and a second color for a second state. The visual cue may comprise a change in shape or change in size of the bookmark symbol.

The method, according to the invention, comprises generating an alert service with a custom condition-based facility for each bookmarked graphical message element, wherein when enabled for a particular bookmarked graphical message element the alert service provides an alert when a timed period has expired, or other specified condition has been met for the custom condition-based facility for the particular bookmarked graphical message element. The generating the alert service may further comprise: generating an alert icon for display on the bookmarked graphical message elements for activating the alert service; generating a field for display, upon user selection of the alert icon, for user selection of a specified condition for the custom condition-based facility for a bookmarked graphical message element; setting the custom condition-based facility for a bookmarked graphical message element to a user selected condition upon user selection of a value in the field; and generating an alert for a corresponding graphical message element upon the user selected condition being met to make flight crew aware of the corresponding graphical message element. The field may include an auto populated value that may be overridden to a different user selected value based on user input to the field. The auto populated value in the field may be based on message content of the bookmarked graphical message element when information from which a specified condition or a duration for a timed period can be derived is provided in the message content, and may be based on a predetermined default value when information from which a specified condition or a duration for the timed period can be derived is not provided in the message content. The predetermined default value may be set or changed by configuring a default timer under a user settings page provided by the transcription system. The method, according to the invention, further comprises:
generating a selectable bookmark graphical element for display on the first graphical display page that when selected indicates the selection of bookmarked graphical message elements for display but not graphical message elements that have not been bookmarked; and signaling the aircraft display device to display the second graphical display page instead of the first graphical display page based on user selection of the selectable bookmark graphical element.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention as set forth in the appended claims. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in software executed by a processor, or in a combination of the two. A software may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as set forth in the appended claims as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A transcription system for an aircraft, the transcription system comprising a controller, the controller configured to:
receive (602) a plurality of messages originating from one or more entities outside of the aircraft;
extract message content from the plurality of received messages as a textual representation of the message content;
generate (604) a graphical message element for each of the plurality of received messages that includes a section for displaying the textual representation of the message content for a corresponding received message and a bookmark symbol for display on the graphical message element, wherein the bookmark symbol is selectable to change from an unselected state to a selected state indicating that the graphical message element has been bookmarked;
generate (606) a first graphical display page for display on an aircraft display device for displaying the graphical message elements for each of the plurality of received messages;
generate (608) a second graphical display page for display on the aircraft display device for displaying the graphical message elements that have been bookmarked but not graphical message elements that have not been bookmarked,
wherein the controller is configured to generate (610) a selectable bookmark graphical element for display on the first graphical display page that, when selected, indicates the selection of bookmarked graphical message elements for display but not graphical message elements that have not been bookmarked; and
signal (612) the aircraft display device to display the second graphical display page instead of the first graphical display page based on user selection of the selectable bookmark graphical element, and
generate (614) an alert service with a custom condition-based facility for each bookmarked graphical message element, wherein when enabled for a particular bookmarked graphical message element, the alert service provides an alert when a timed period has expired, or other specified condition has been met for the custom condition-based facility for the particular bookmarked graphical message element.

2. The transcription system of claim 1, wherein the controller is configured to apply a visual cue to the bookmark symbol to indicate the selected state and the unselected state.

3. The transcription system of claim 1, wherein the controller is further configured to:
generate an alert icon for display on the bookmarked graphical message elements for activating the alert service.

4. The transcription system of claim 3, wherein the controller is further configured to:
generate a field for display, upon user selection of the alert icon, for user selection of a specified condition for the custom condition-based facility for a bookmarked graphical message element.

5. The transcription system of claim 4, wherein:
the field includes an auto populated value that may be overridden to a different user selected value based on user input to the field; and
the auto populated value in the field is based on message content of the bookmarked graphical message element when information from which a specified condition or a duration for a timed period can be derived is provided in the message content.

6. A method for a transcription system for an aircraft, the method comprising:
receiving (602) a plurality of messages originating from one or more entities outside of the aircraft;
extracting message content from the plurality of received messages as a textual representation of the message content;
generating (604) a graphical message element for each of the plurality of received messages that includes a section for displaying the textual representation of the message content for a corresponding received message and a bookmark symbol for display on the graphical message element, wherein the bookmark symbol is selectable to change from an unselected state to a selected state indicating that the graphical message element has been bookmarked;
generating (606) a first graphical display page for display on an aircraft display device for displaying the graphical message elements for each of the plurality of received messages;
generating (608) a second graphical display page for display on the aircraft display device for displaying the graphical message elements that have been bookmarked but not graphical message elements that have not been bookmarked;
generating (610) a selectable bookmark graphical element for display on the first graphical display page that when selected indicates the selection of bookmarked graphical message elements for display but not graphical message elements that have not been bookmarked; and
signaling (612) the aircraft display device to display the second graphical display page instead of the first graphical display page based on user selection of the selectable bookmark graphical element; and
generating (614) an alert service with a custom condition-based facility for each bookmarked graphical message element, wherein when enabled for a particular bookmarked graphical message element the alert service provides an alert when a timed period has expired, or other specified condition has been met for the custom condition-based facility for the particular bookmarked graphical message element.

7. The method of claim 6, wherein the generating the alert service further comprises:
generating an alert icon for display on the bookmarked graphical message elements for activating the alert service;
generating a field for display, upon user selection of the alert icon, for user selection of a specified condition for the custom condition-based facility for a bookmarked graphical message element;
setting the custom condition-based facility for a bookmarked graphical message element to a user selected condition upon user selection of a value in the field; and
generating an alert for a corresponding graphical message element upon the user selected condition being met to make flight crew aware of the corresponding graphical message element.

8. The method of claim 7, wherein
the field includes an auto populated value that may be overridden to a different user selected value based on user input to the field; and
the auto populated value in the field is based on:
message content of the bookmarked graphical message element when information from which a specified condition or a duration for a timed period can be derived is provided in the message content, and
a predetermined default value when information from which a specified condition or a duration for the timed period can be derived is not provided in the message content.

## Patentansprüche

1. Transkriptionssystem für ein Flugzeug, wobei das Transkriptionssystem eine Steuerung umfasst, wobei die Steuerung dazu konfiguriert ist:
eine Vielzahl von Nachrichten zu empfangen (602), die von einer oder mehreren Entitäten außerhalb des Flugzeugs stammen;
Nachrichteninhalt aus der Vielzahl von empfangenen Nachrichten als eine Textdarstellung des Nachrichteninhalts zu extrahieren;
ein graphisches Nachrichtenelement für jede der Vielzahl von empfangenen Nachrichten zu erzeugen (604), das einen Abschnitt zum Anzeigen der Textdarstellung des Nachrichteninhalts für eine entsprechende empfangene Nachricht und ein Lesezeichensymbol für eine Anzeige auf dem graphischen Nachrichtenelement beinhaltet, wobei das Lesezeichensymbol auswählbar ist, um von einem nicht ausgewählten Zustand zu einem ausgewählten Zustand zu wechseln, der angibt, dass das graphische Nachrichtenelement mit einem Lesezeichen versehen wurde;
eine erste graphische Anzeigeseite zur Anzeige auf einer Flugzeuganzeigevorrichtung zum Anzeigen der graphischen Nachrichtenelemente für jede der Vielzahl von empfangenen Nachrichten zu erzeugen (606);
eine zweite graphische Anzeigeseite zur Anzeige auf der Flugzeuganzeigevorrichtung zum Anzeigen der graphischen Nachrichtenelemente, die mit einem Lesezeichen versehen wurden, aber nicht der graphischen Nachrichtenelemente, die nicht mit einem Lesezeichen versehen wurden, zu erzeugen (608),
wobei die Steuerung dazu konfiguriert ist, ein auswählbares graphisches Lesezeichenelement zur Anzeige auf der ersten graphischen Anzeigeseite zu erzeugen (610), das, wenn es ausgewählt wird, die Auswahl von mit einem Lesezeichen versehenen graphischen Nachrichtenelementen zur Anzeige angibt, aber nicht von graphischen Nachrichtenelementen, die nicht mit einem Lesezeichen versehen wurden, und
der Flugzeuganzeigevorrichtung zu signalisieren (612), die zweite graphische Anzeigeseite anstelle der ersten graphischen Anzeigeseite auf Basis einer Benutzerauswahl des auswählbaren graphischen Lesezeichenelements anzuzeigen, und
einen Alarmdienst mit einer individuellen bedingungsbasierten Funktion für jedes mit einem Lesezeichen versehene graphische Nachrichtenelement zu erzeugen (614), wobei der Alarmdienst, wenn er für ein bestimmtes mit einem Lesezeichen versehenes graphisches Nachrichtenelement aktiviert ist, einen Alarm bereitstellt, wenn eine zeitbegrenzte Spanne abgelaufen ist oder wenn eine andere spezifizierte Bedingung für die individuelle bedingungsbasierte Funktion für das bestimmte mit einem Lesezeichen versehene graphische Nachrichtenelement erfüllt ist.

2. Transkriptionssystem nach Anspruch 1, wobei die Steuerung dazu konfiguriert ist, einen optischen Hinweis auf das Lesezeichensymbol anzuwenden, um den ausgewählten Zustand und den nicht ausgewählten Zustand anzugeben.

3. Transkriptionssystem nach Anspruch 1, wobei die Steuerung ferner dazu konfiguriert ist:
ein Alarm-Icon zur Anzeige auf den mit einem Lesezeichen versehenen graphischen Nachrichtenelementen zum Aktivieren des Alarmdienstes zu erzeugen.

4. Transkriptionssystem nach Anspruch 3, wobei die Steuerung ferner dazu konfiguriert ist:
bei einer Benutzerauswahl des Alarm-Icons ein Feld zur Anzeige für eine Benutzerauswahl einer spezifizierten Bedingung für die individuelle bedingungsbasierte Funktion für ein mit einem Lesezeichen versehenes graphisches Nachrichtenelement zu erzeugen.

5. Transkriptionssystem nach Anspruch 4, wobei:
das Feld einen automatisch ausgefüllten Wert beinhaltet, der mit einem unterschiedlichen Benutzer-ausgewählten Wert auf Basis einer Benutzereingabe in das Feld überschrieben werden kann; und
der automatisch ausgefüllte Wert in dem Feld auf Nachrichteninhalt des mit einem Lesezeichen versehenen graphischen Nachrichtenelements basiert, wenn Informationen, von denen eine spezifizierte Bedingung oder eine Dauer für eine zeitbegrenzte Spanne abgeleitet werden kann, in dem Nachrichteninhalt bereitgestellt sind.

6. Verfahren für ein Transkriptionssystem für ein Flugzeug, das Verfahren umfassend:
Empfangen (602) einer Vielzahl von Nachrichten, die von einer oder mehreren Entitäten außerhalb des Flugzeugs stammen;
Extrahieren von Nachrichteninhalt aus der Vielzahl von empfangenen Nachrichten als eine Textdarstellung des Nachrichteninhalts;
Erzeugen (604) eines graphischen Nachrichtenelements für jede der Vielzahl von empfangenen Nachrichten, das einen Abschnitt zum Anzeigen der Textdarstellung des Nachrichteninhalts für eine entsprechende empfangene Nachricht und ein Lesezeichensymbol für eine Anzeige auf dem graphischen Nachrichtenelement beinhaltet, wobei das Lesezeichensymbol auswählbar ist, um von einem nicht ausgewählten Zustand zu einem ausgewählten Zustand zu wechseln, der angibt, dass das graphische Nachrichtenelement mit einem Lesezeichen versehen wurde;
Erzeugen (606) einer ersten graphischen Anzeigeseite zur Anzeige auf einer Flugzeuganzeigevorrichtung zum Anzeigen der graphischen Nachrichtenelemente für jede der Vielzahl von empfangenen Nachrichten;
Erzeugen (608) einer zweiten graphischen Anzeigeseite zur Anzeige auf der Flugzeuganzeigevorrichtung zum Anzeigen der graphischen Nachrichtenelemente, die mit einem Lesezeichen versehen wurden, aber nicht der graphischen Nachrichtenelemente, die nicht mit einem Lesezeichen versehen wurden,
Erzeugen (610) eines auswählbaren graphischen Lesezeichenelements zur Anzeige auf der ersten graphischen Anzeigeseite, das, wenn es ausgewählt wird, die Auswahl von mit einem Lesezeichen versehenen graphischen Nachrichtenelementen zur Anzeige angibt, aber nicht von graphischen Nachrichtenelementen, die nicht mit einem Lesezeichen versehen wurden; und
Signalisieren (612) an die Flugzeuganzeigevorrichtung, die zweite graphische Anzeigeseite anstelle der ersten graphischen Anzeigeseite auf Basis einer Benutzerauswahl des auswählbaren graphischen Lesezeichenelements anzuzeigen, und
Erzeugen (614) eines Alarmdienstes mit einer individuellen bedingungsbasierten Funktion für jedes mit einem Lesezeichen versehene graphische Nachrichtenelement, wobei der Alarmdienst, wenn er für ein bestimmtes mit einem Lesezeichen versehenes graphisches Nachrichtenelement aktiviert ist, einen Alarm bereitstellt, wenn eine zeitbegrenzte Spanne abgelaufen ist oder wenn eine andere spezifizierte Bedingung für die individuelle bedingungsbasierte Funktion für das bestimmte mit einem Lesezeichen versehene graphische Nachrichtenelement erfüllt ist.

7. Verfahren nach Anspruch 6, wobei das Erzeugen des Alarmdienstes ferner Folgendes umfasst:
Erzeugen eines Alarm-Icons zur Anzeige auf den mit einem Lesezeichen versehenen graphischen Nachrichtenelementen zum Aktivieren des Alarmdienstes;
Erzeugen, bei einer Benutzerauswahl des Alarm-Icons, eines Feldes zur Anzeige für eine Benutzerauswahl einer spezifizierten Bedingung für die individuelle bedingungsbasierte Funktion für ein mit einem Lesezeichen versehenes graphisches Nachrichtenelement;
Einstellen der individuellen bedingungsbasierten Funktion für ein mit einem Lesezeichen versehenes graphisches Nachrichtenelement auf eine Benutzer-ausgewählte Bedingung nach einer Benutzerauswahl eines Wertes in dem Feld; und
Erzeugen eines Alarms für ein entsprechendes graphisches Nachrichtenelement, nachdem die Benutzer-ausgewählte Bedingung erfüllt ist, um eine Flugbesatzung auf das entsprechende graphische Nachrichtenelement aufmerksam zu machen.

8. Verfahren nach Anspruch 7, wobei
das Feld einen automatisch ausgefüllten Wert beinhaltet, der mit einem unterschiedlichen Benutzer-ausgewählten Wert auf Basis einer Benutzereingabe in das Feld überschrieben werden kann; und
der automatisch ausgefüllte Wert in dem Feld auf Folgendem basiert:
Nachrichteninhalt des mit einem Lesezeichen versehenen graphischen Nachrichtenelements, wenn Informationen, von denen eine spezifizierte Bedingung oder eine Dauer für eine zeitbegrenzte Spanne abgeleitet werden kann, in dem Nachrichteninhalt bereitgestellt sind,
einem vorbestimmten Standardwert, wenn Informationen, von denen eine spezifizierte Bedingung oder eine Dauer für eine zeitbegrenzte Spanne abgeleitet werden kann, nicht in dem Nachrichteninhalt bereitgestellt sind.

## Revendications

1. Système de transcription pour un aéronef, le système de transcription comprenant un contrôleur, le contrôleur étant configuré pour :
recevoir (602) une pluralité de messages provenant d'une ou plusieurs entités extérieures à l'aéronef ;
extraire le contenu de message de la pluralité de messages reçus sous la forme d'une représentation textuelle du contenu de message ;
générer (604) un élément de message graphique pour chaque message de la pluralité de messages reçus qui inclut une section d'affichage pour afficher la représentation textuelle du contenu de message pour un message reçu correspondant et un symbole de marque-page à afficher sur l'élément de message graphique, dans lequel le symbole de marque-page est sélectionnable pour passer d'un état non sélectionné à un état sélectionné indiquant que l'élément de message graphique a été mis en marque-page ;
générer (606) une première page d'affichage graphique à afficher sur un dispositif d'affichage d'aéronef pour afficher les éléments de message graphiques pour chaque message de la pluralité de messages reçus ;
générer (608) une deuxième page d'affichage graphique à afficher sur le dispositif d'affichage d'aéronef pour afficher les éléments de message graphiques qui ont été mis en marque-page mais pas les éléments de message graphiques qui n'ont pas été mis en marque-page,
dans lequel le contrôleur est configuré pour générer (610) un élément graphique de marque-page sélectionnable à afficher sur la première page d'affichage graphique qui, quand il est sélectionné, indique la sélection d'éléments de message graphiques mis en marque-page à afficher, mais pas les éléments de message graphiques qui n'ont pas été mis en marque-page ; et
signaler (612) le dispositif d'affichage d'aéronef pour afficher la deuxième page d'affichage graphique au lieu de la première page d'affichage graphique sur la base de la sélection par l'utilisateur de l'élément graphique de marque-page sélectionnable, et
générer (614) un service d'alerte avec une fonction personnalisée basée sur des conditions pour chaque élément de message graphique mis en marque-page, dans lequel, quand il est activé pour un élément de message graphique particulier mis en marque-page, le service d'alerte fournit une alerte quand une période de délai a expiré, ou qu'une autre condition spécifiée a été remplie pour la fonction personnalisée basée sur des conditions pour l'élément de message graphique particulier mis en marque-page.

2. Système de transcription selon la revendication 1, dans lequel le contrôleur est configuré pour appliquer un repère visuel au symbole de marque-page afin d'indiquer l'état sélectionné et l'état non sélectionné.

3. Système de transcription selon la revendication 1, dans lequel le contrôleur est en outre configuré pour :
générer une icône d'alerte à afficher sur les éléments de message graphiques mis en marque-page afin d'activer le service d'alerte.

4. Système de transcription selon la revendication 3, dans lequel le contrôleur est en outre configuré pour :
générer un champ à afficher, lors de la sélection par l'utilisateur de l'icône d'alerte, pour la sélection par l'utilisateur d'une condition spécifiée pour la fonction personnalisée basée sur des conditions pour un élément de message graphique mis en marque-page.

5. Système de transcription selon la revendication 4, dans lequel :
le champ inclut une valeur auto-complétée qui peut être écrasée par une valeur différente sélectionnée par l'utilisateur sur la base de l'entrée d'utilisateur dans le champ ; et
la valeur auto-complétée dans le champ est basée sur le contenu de message de l'élément de message graphique mis en marque-page quand de l'information permettant de déduire une condition spécifiée ou la durée d'une période de délai est fournie dans le contenu de message.

6. Procédé pour un système de transcription destiné à un aéronef, le procédé comprenant :
la réception (602) d'une pluralité de messages provenant d'une ou plusieurs entités extérieures à l'aéronef ;
l'extraction d'un contenu de message à partir de la pluralité de messages reçus sous la forme d'une représentation textuelle du contenu de message ;
la génération (604) d'un élément de message graphique pour chaque message de la pluralité de messages reçus qui inclut une section d'affichage pour afficher la représentation textuelle du contenu de message pour un message reçu correspondant et un symbole de marque-page à afficher sur l'élément de message graphique, dans lequel le symbole de marque-page est sélectionnable pour passer d'un état non sélectionné à un état sélectionné indiquant que l'élément de message graphique a été mis en marque-page ;
la génération (606) d'une première page d'affichage graphique à afficher sur un dispositif d'affichage d'aéronef pour afficher les éléments de message graphiques pour chaque message de la pluralité de messages reçus ;
la génération (608) d'une deuxième page d'affichage graphique à afficher sur le dispositif d'affichage d'aéronef afin d'afficher les éléments de message graphiques qui ont été mis en marque-page mais pas les éléments de message graphiques qui n'ont pas été mis en marque-page ;
la génération (610) d'un élément graphique de marque-page sélectionnable à afficher sur la première page d'affichage graphique qui, quand il est sélectionné, indique la sélection d'éléments de message graphiques mis en marque-page à afficher, mais pas les éléments de message graphiques qui n'ont pas été mis en marque-page ; et
la signalisation (612) au dispositif d'affichage d'aéronef d'afficher la deuxième page d'affichage graphique au lieu de la première page d'affichage graphique sur la base d'une sélection par l'utilisateur de l'élément graphique de marque-page sélectionnable ; et
la génération (614) d'un service d'alerte avec une fonction personnalisée basée sur des conditions pour chaque élément de message graphique mis en marque-page, dans lequel, quand il est activé pour un élément de message graphique particulier mis en marque-page, le service d'alerte fournit une alerte quand une période de délai a expiré, ou qu'une autre condition spécifiée a été remplie pour la fonction personnalisée basée sur des conditions pour l'élément de message graphique particulier mis en marque-page.

7. Procédé selon la revendication 6, dans lequel la génération du service d'alerte comprend en outre :
la génération d'une icône d'alerte à afficher sur les éléments de message graphiques mis en marque-page afin d'activer le service d'alerte ;
la génération d'un champ à afficher, lors de la sélection par l'utilisateur de l'icône d'alerte, pour la sélection par l'utilisateur d'une condition spécifiée pour la fonction personnalisée basée sur des conditions pour un élément de message graphique mis en marque-page ;
la configuration de la fonction personnalisée basée sur des conditions pour un élément de message graphique mis en marque-page à une condition sélectionnée par l'utilisateur lors de la sélection par l'utilisateur d'une valeur dans le champ ; et
la génération d'une alerte pour un élément de message graphique correspondant quand la condition sélectionnée par l'utilisateur est remplie, afin d'informer l'équipage de l'élément de message graphique correspondant.

8. Procédé selon la revendication 7, dans lequel
le champ inclut une valeur auto-complétée qui peut être écrasée par une valeur différente sélectionnée par l'utilisateur sur la base de l'entrée d'utilisateur dans le champ ; et
la valeur auto-complétée dans le champ est basée sur :
le contenu de message de l'élément de message graphique mis en marque-page quand de l'information permettant de déduire une condition spécifiée ou la durée d'une période de délai est fournie dans le contenu de message, et
une valeur par défaut prédéterminée quand l'information permettant de déduire une condition spécifiée ou la durée d'une période de délai n'est pas fournie dans le contenu de message.
